# EUROPEAN PATENT APPLICATION

(11) **EP 4 793 702 A1**
(43) Date of publication of application: **19.08.2026**
(21) Application number: 26158029.4
(22) Date of filing: 12.02.2026
(51) Int. Cl.: G03B 17/56, F16M 7/00, F16M 11/00

(54) **LEVELING SYSTEM WITH THREE-WAY ADJUSTMENT FOR CAMERA SUPPORT HEADS**

(30) Priority: 12.02.2025 IT 202500002673
(71) Applicant: Cartoni S.p.A.- Societa' Benefit, 00159 Roma (IT)
(72) Inventor: MINOTTI, Giammarco, 00159 Roma (IT); FIORE, Alessandro, 00159 Roma (IT)
(74) Representative: Mulas, Chiara

(57) **Abstract**

The present invention relates to a 3-way adjustment system (100) for supporting a head for a photo or video camera and adjusting its filming plane (xyz), said system (100) comprising a fixed base plate (1), a top movable plate (2) for supporting said head, and three adjustment axes (3) connecting the two plates (1, 2) to each other, each adjustment axis (3) having two ends (32, 31) along its longitudinal axis (r). Furthermore, said system (100) further comprising three top kinematic pairs (K₁, K₂, K₃), each arranged at a first end (32) of a corresponding adjustment axis (3) and constrained to the top movable plate (2), and three base kinematic pairs (R₁, R₂, R₃), each configured to allow 1 degree of freedom along a translation axis coinciding with the longitudinal axis (r) of the respective adjustment axis (3). The system (100) is characterized in that each top kinematic pair (K₁, K₂, K₃) is configured to allow 4 degrees of freedom, and in that each base kinematic pair (R₁, R₂, R₃) is arranged at the second end (31) of a corresponding adjustment axis (3) and constrained to the base plate (1).

## Description

The present invention relates to an adjustment leveling system for camera support heads.

More specifically, the present invention relates to a three-way adjustment system for video/photo camera heads.

In the film industry, innovative and reliable tools are essential to ensure high-quality filming. One of the main challenges is keeping cameras level with respect to the horizontal plane, especially under dynamic conditions or on uneven surfaces.

To address this problem, state-of-the-art devices are known that allow adjustment of the relative angles between a lower support plane or base and an upper support plane or top plate on which a camera is mounted. These adjustment devices are based on variable-length axes that allow the top plate to be tilted relative to the base to be changed.

Currently, such adjustment devices are mainly divided into two categories:
- 3-way adjustment systems; and
- 4-way adjustment systems.

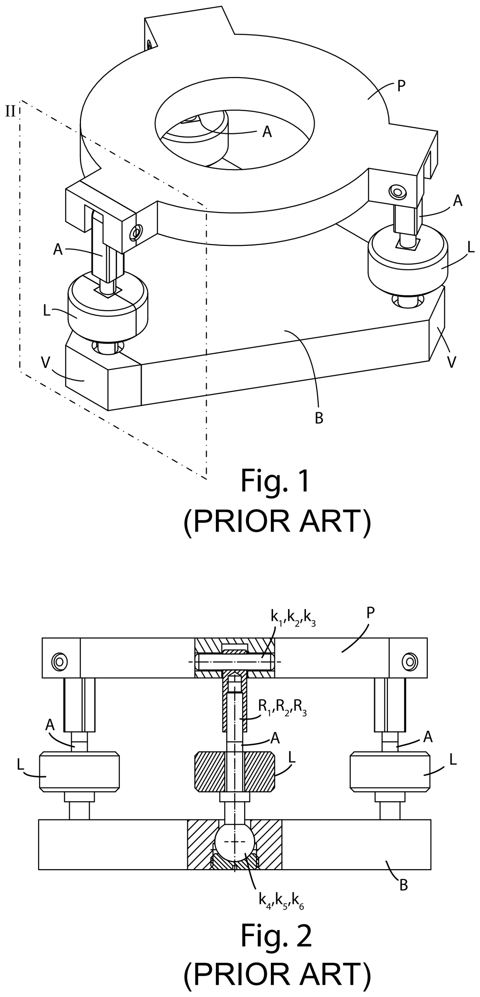

As shown in Figures 1-3, some prior-art 3-way adjustment systems are ease to use and can adjust the three axes independently. Generally, these systems have a triangular base B with adjustable axes A positioned near the vertices V and connecting a top plate P for supporting the camera head.

Each adjustable axis A is provided with a locking system L that reduces the residual backlash between the adjustable axis A and the base B. However, in solutions currently available on the market, the revolute pair between the adjustable axis A and the top plate P is not provided with a backlash elimination system, which may affect the leveling accuracy.

In an exemplary embodiment of such prior-art systems, each adjustable axis A can be mounted in its spherical seat from beneath the base B and is sealed by a threaded cap with a housing that is also spherical. The adjustment knob L is fitted with an interference fit onto the same axis and the hinge is screwed in. The latter is integral with a pin coupled with backlash relative to the adjustment plate P.

In this system, by acting on the knob L, the axis A is rotated in its housing at the base B. The rotation implies a change in the distance from the hinge and, consequently, a change in the angle between the base B and the top plate P.

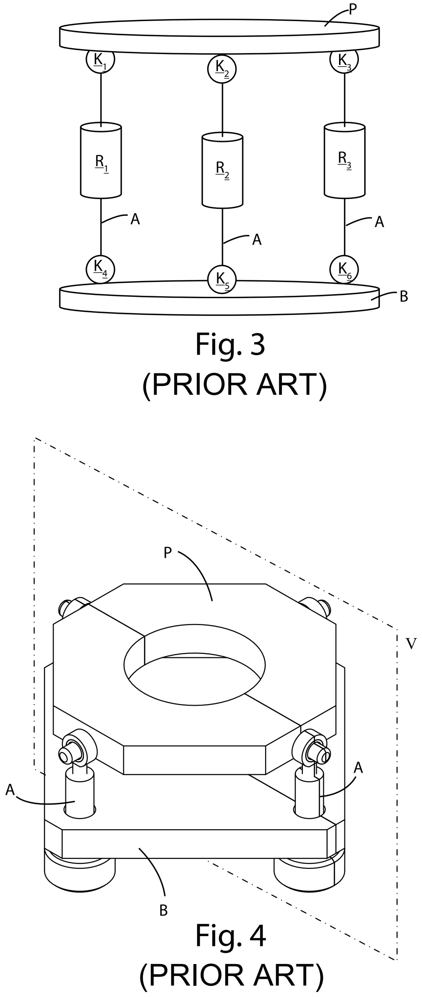

With reference to Figure 3, such systems provide eight bodies and nine kinematic pairs, in particular:
- three revolute pairs K₁, K₂, K₃, each allowing 1 degree of freedom, fixed to the movable plate P that supports the upper-level support (fluid heads, etc.);
- three spherical pairs K₄, K₅, K₆, fixed to the base B above the primary support (tripod, column, etc.), also referred to as base rotational pairs that allow 3 degrees of freedom; and
- three helical pairs R₁, R₂, R₃, each allowing 1 degree of freedom, each arranged along a respective axis A to allow adjustment of the length of the axes A and, therefore, to modify the position of the movable plate P relative to the base B.

Using the Kutzbach's formula $gdl = 6 \left(m-1\right) - 5 {C}_{1} - 4 {C}_{2} - 3 {C}_{3} - 2 {C}_{4} - {C}_{5}$ where
gdl = degrees of freedom of the adjustment system;
m = number of bodies;
C₁ = number of kinematic pairs that allow 1 degree of freedom;
C₂ = number of kinematic pairs that allow 2 degrees of freedom;
C₃ = number of kinematic pairs that allow 3 degrees of freedom;
C₄ = number of kinematic pairs that allow 4 degrees of freedom;
C₅ = number of kinematic pairs that allow 5 degrees of freedom; and
substituting the values with those of the system of Figure 3 (m = 8, C₁ = 6, C₂ = 0, C₃ = 3, C₄ = 0, and C₅ = 0), it follows that this system has 3 degrees of freedom, corresponding to two rotations around the generating axes of the base plane B and a translation perpendicular to the base plane B itself. This configuration enables more intuitive and precise adjustments compared to 4-way systems, thereby improving the effectiveness of filming.

Despite the advantages offered, such types of systems present certain drawbacks, such as possible mechanical instability due to the backlash between the kinematic pairs and the need to improve the locking systems to ensure more precise and stable adjustment over time.

However, in many practical applications the axis A consists of a single body that comprises the hinge and is screwed into the spherical pairs K₄, K₅, K₆, protruding below the base B. Therefore, by locking the kinematic adjustment pairs (eliminating the helical pairs R₁, R₂, R₃) and updating the values in the Kutzback's formula (m = 5, C₁ = 3, C₂ = 0, C₃ = 3, C₄ = 4, and C₅ = 0), the mechanism is rendered isostatic.

As shown in Figures 4 - 6, the 4-way adjustment systems of the known art, less common in the film industry than the 3-way systems despite offering greater stability compared to other solutions, use a quadrangular or circular base B configuration, with four adjustable axes A arranged at the angles or at 90° with respect to one another and connecting the base B and the top plate P.

In an exemplary configuration of a 4-way adjustment system known in the state of the art, the axis A can be mounted in its cylindrical seat on the base B and is locked vertically by inserting a knob L with a forced fit on the opposite side, and, on the same axis A (bored), the threaded eyelet with a spherical housing at its head is screwed onto and houses a bored sphere that slides horizontally on a pin integral with the plate P.

In such a system, by acting simultaneously on two knobs L at opposite corners, it is possible to rotate the axis A in its housing at the base B, and the rotation entails a change in distance relative to the eyelet and, consequently, a displacement of the sphere along the axis of the pin.

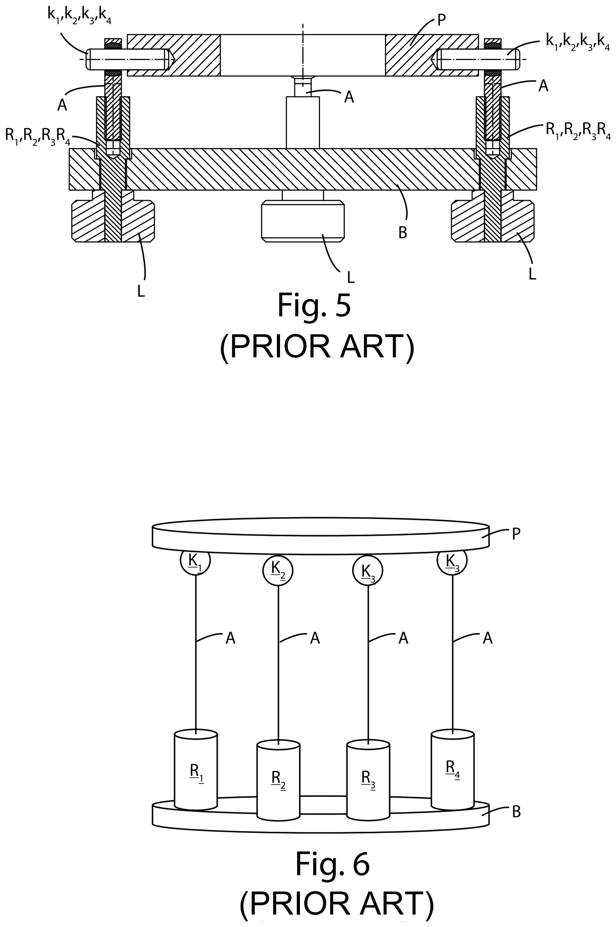

As can be seen in Figure 6, a 4-way adjustment system generally provides eight kinematic pairs:
- four translating spherical pairs K₁, K₂, K₃, K₄, each allowing 4 degrees of freedom, and are fixed to the movable plate P that supports the upper-level support; and
- four helical pairs R₁, R₂, R₃, R₄, each allowing 1 degree of freedom, and are fixed to the base B above the primary support.

Referring to the Kutzbach's formula and substituting the values with those of the system of Figure 6 (m = 6, C₁ = 4, C₂ = 0, C₃ = 0, C₄ = 4, and C₅ = 0), it follows that the kinematics has 2 degrees of freedom, i.e., one less than the 3-way control system. This result is explained in that two opposing axes are constrained to displace by the same amount, as they are not independent of each other.

By combining or separating the kinematic pairs, a variation in the number of bodies is obtained, which still leads to the same mathematical result.

By locking the adjustment kinematic pairs (eliminating the helical pairs R₁, R₂, R₃, R₄) and applying the Kutzbach's formula again (m = 2, C₁ = 0, C₂ = 0, C₃ = 0, C₄ = 4, and C₅ = 0), the kinematics becomes a doubly hyperstatic structure, wherein only three of the four axes would be sufficient to obtain an isostatic mechanism.

The main advantage of this system is its reduced height, which contributes to greater stability of the support. However, it has the limitation of requiring the simultaneous adjustment of two opposing axes A to vary the angle between the base B and the top plate P, this constraint makes the alignment process more complex and less intuitive compared to other adjustment systems.

From a kinematic perspective, this 4-way adjustment system typically has two degrees of freedom, with axes constrained to simultaneous displacements, this feature reduces the system's flexibility and limits its effectiveness in some filming applications, where faster and more independent adjustments are preferable. In fact, many solutions currently available on the market do not provide a mechanism to compensate for the backlash between the kinematic pairs, resulting in potential instabilities while filming.

The aim of the present invention is to overcome the drawbacks of the prior art, in order to obtain a leveling and adjustment system for filming cameras that simplifies their alignment, reducing the complexity of the known state-of-the-art systems, and at the same time allowing a more intuitive and rapid setup, minimizing errors and operating times.

In particular, the aim of the invention is to obtain a system for adjusting the leveling of a top plate, on which a traditional fluid head and thus a camera will be placed, relative to a base body, which in turn will be fixed to a fixed support, such as a tripod or equivalent.

Furthermore, the aim of the invention is to increase the flexibility of the prior art adjustment systems, while also aiming to reduce the mechanical backlash of the elements that form these types of systems, thereby improving their stability and preventing unwanted micro-movements.

The object of the present invention is a 3-way adjustment system for supporting a head for a photo or video camera and adjusting its filming plane, said system comprising a fixed base plate, a top movable plate for supporting said head, and three adjustment axes connecting the two plates to each other, each adjustment axis having two ends along its longitudinal axis, said system further comprising three top kinematic pairs, each arranged at a first end of a corresponding adjustment axis and constrained to the top movable plate, three base kinematic pairs, each configured to allow 1 degree of freedom along a translation axis coinciding with the longitudinal axis of the respective adjustment axis, said system being characterized in that each top kinematic pair is configured to allow 4 degrees of freedom, and in that each base kinematic pairs is arranged at the second end of a corresponding adjustment axis and constrained to the base plate.

In particular, according to the invention, said three head kinematic pairs may be three translating spherical pairs.

More specifically, according to the invention, each of said adjustment axes may comprises a rod having a sphere at the first end, and wherein said top movable plate comprises three cylindrical seats having a sliding axis, within each of which the sphere of the respective rod is slidably coupled.

Moreover according to the invention, each cylindrical seat may be arranged on said top movable plate in such a way that its respective sliding axis intersects the geometric center of the top movable plate and is thus oriented at an angle of 120° with respect to the sliding axis of the other cylindrical seats.

Further according to the invention, said sphere of each rod may have a diameter in a 2:1 ratio with the diameter of the cross-section perpendicular to the axis of the rod.

Further according to the invention, the diameter of each of said cylindrical seats may be substantially coincident with the diameter of the respective sphere.

Furthermore, according to the invention, the longitudinal axis of each adjustment axis may be perpendicular to the plane lying on the upper face of said base plate.

Preferably, according to the invention, said three base kinematic pairs may be three helical pairs.

In particular, according to the invention, each of said adjustment axes may comprise a rod, wherein the base plate may comprise three through-holes, and wherein the body of the rod of the respective adjustment axis is rotatably engaged within the inner surface of each hole.

More specifically, according to the invention, each rod of the respective adjustment axis may have a threaded portion on its external body that engages a threaded portion formed on the inner surface of the respective hole present on the base plate.

Again according to the invention, at the second end of each rod of the respective adjustment axis, a lower knob may be fixed.

Further according to the invention, said system may further comprise a locking system for each adjustment axis associated with it, configured to lock/unlock the respective top kinematic pair upon user action.

In particular, according to the invention, each locking system may be a height-adjustable spacer adapted to act on the respective adjustable axis between the two plates.

Further according to the invention, the locking system may comprise a hollow cylindrical support fixed beneath the base plate, wherein said support may have an internal cylindrical surface and an external cylindrical surface, wherein said locking system may further comprise an upper knob having a hollow cylindrical body whose internal cylindrical cavity is rotatably coupled to the external cylindrical surface of the hollow cylindrical support.

In addition, according to the invention, an external thread may be provided on the external cylindrical surface of said support, said external thread is rotatably engaged by an internal thread obtained in the internal cylindrical cavity of the upper knob.

Furthermore, according to the invention, each upper knob may provide at its upper end a hemispherical portion with its center positioned along the adjustment direction of the corresponding adjustment axis.

Again according to the invention, the locking system may further provide a washer having a flat upper face, a central hole, wherein said washer is arranged between the top movable plate and the upper knob and has the body of the rod of the respective adjustment axis passing through its central hole.

Finally, according to the invention, the lower face of said washer may have a concavity at the opening of the central hole, adapted to engage the hemispherical portion of the respective upper knob.

The invention will now be described by way of example, but without limitation, with particular reference to the drawings of the attached figures, in which
Figure 1 shows a perspective view of a 3-way adjustment system according to the prior art;
Figure 2 shows a partial sectional side view along section plane II of the system of Figure 1;
Figure 3 shows a kinematic diagram of the system of Figure 1;
Figure 4 shows a perspective view of a 4-way adjustment system according to the prior art;
Figure 5 shows a partial sectional side view along section plane V of the system of Figure 4;
Figure 6 shows a kinematic diagram of the system of Figure 4;
Figure 7 shows a kinematic diagram of the three-way adjustment system according to the invention;
Figure 8 shows a perspective view of the three-way adjustment system according to the invention;
Figure 9 shows a schematic view of the translating spherical coupling system of the adjustment system of Figure 8;
Figure 10 shows a longitudinal sectional view along an xy plane parallel to the upper face of the top plate of the adjustment system of Figure 8;
Figure 11 shows the kinematic diagram of Figure 7 in a first operating configuration;
Figure 12 shows the adjustment system of Figure 8 in said first operating configuration;
Figure 13 shows a longitudinal sectional view along an xy plane parallel to the upper face of the top plate of the adjustment system of Figure 12;
Figure 14 shows a bottom view of the adjustment system of Figure 12;
Figure 15 shows a partial sectional side view along the plane XV - XV' of the adjustment system of Figure 14;
Figure 16 shows the adjustment system of Figure 8 in a second operating configuration; and
Figure 17 shows the view of Figure 15 with the adjustment system in said second operating configuration.

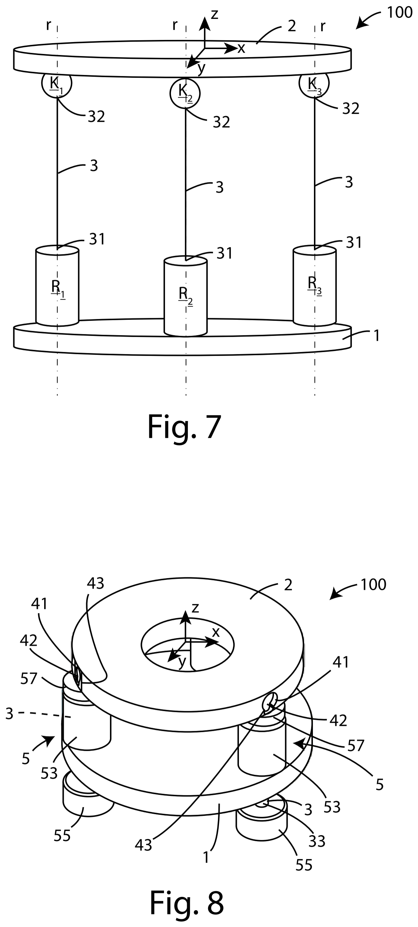

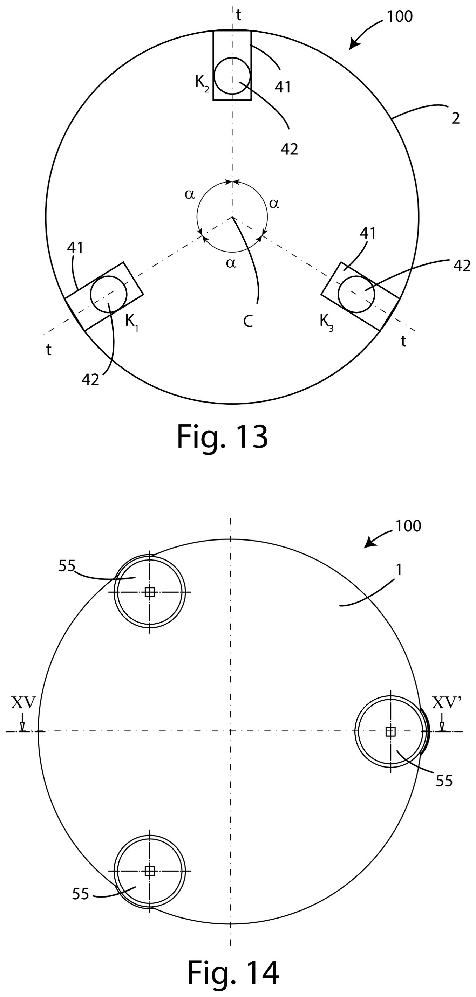

The present invention relates to a support-head adjustment system for cameras, indicated by the reference numeral 100, as shown in Figures 7-17. In particular, this system is applied to a support-head leveler for cameras.

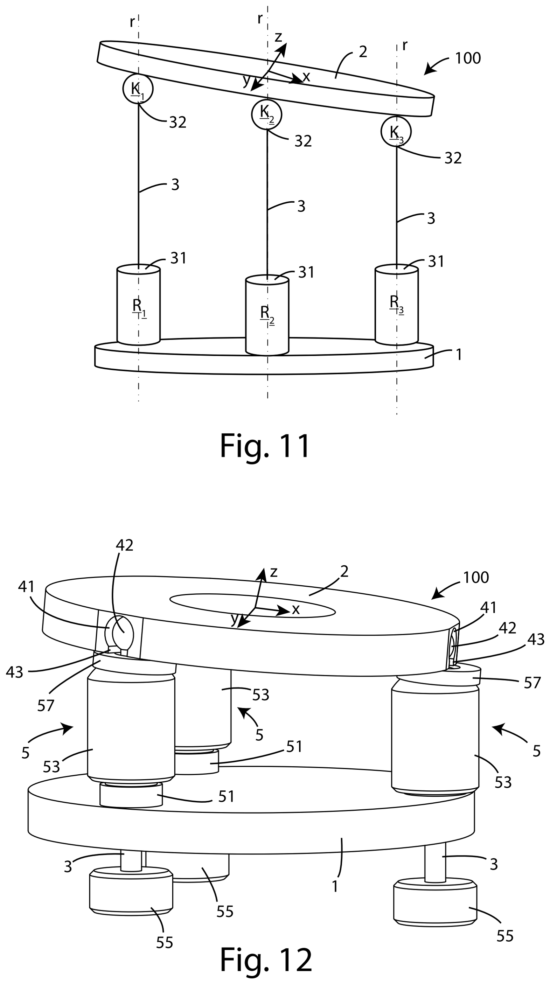

Figures 7 and 11 show the kinematic diagram of the 3-way adjustment system 100 according to the invention in an initial position and in a first operating configuration.

Compared to the prior art 3-way adjustment system, schematized in Figure 3, the adjustment system 100 according to the invention does not include the base rotational kinematic pairs K₄, K₅, K₆ and consequently comprises a base plate 1, and a movable top plate 2 to support a head connected to the base plate 1 by means of three adjustment axes 3.

The adjustment system 100 also comprises the following kinematic pairs:
- three top kinematic pairs K₁, K₂, K₃, in particular three translating spherical pairs K₁, K₂, K₃, each configured to allow 4 degrees of freedom, each arranged at a first end 32 of a corresponding adjustment axis 3 and constrained to the top plate 2; and
- three base kinematic pairs R₁, R₂, R₃, in particular three helical pairs R₁, R₂, R₃, each configured to allow 1 degree of freedom in the direction defined by the translation axis coinciding with the respective adjustment axis 3, each arranged at the second end 31 of a corresponding adjustment axis 3 and constrained to the base plate 1.

Each adjustment axis 3 is in fact constrained to the base plate 1 and the top plate 2 by means of two kinematic pairs K₁, R₁; K₂, R₂; K₃, R₃, in particular to the base plate 1 by means of the base pair R₁; R₂; R₃ at its second end 31 and to the top plate 2 by means of the top pair K₁; K₂; K₃ at its first end 32. Each adjustment axis 3 therefore functions as a movable connection between the two plates 1, 2, allowing a controlled and defined movement.

Each top pair K₁, K₂, K₃ acts as a three-dimensional slider-type kinematic constraint, thus allowing rotation around the axes of a reference system integral with the base plate 1 and translation in the radial direction along the radial axis t with respect to the top plate 2.

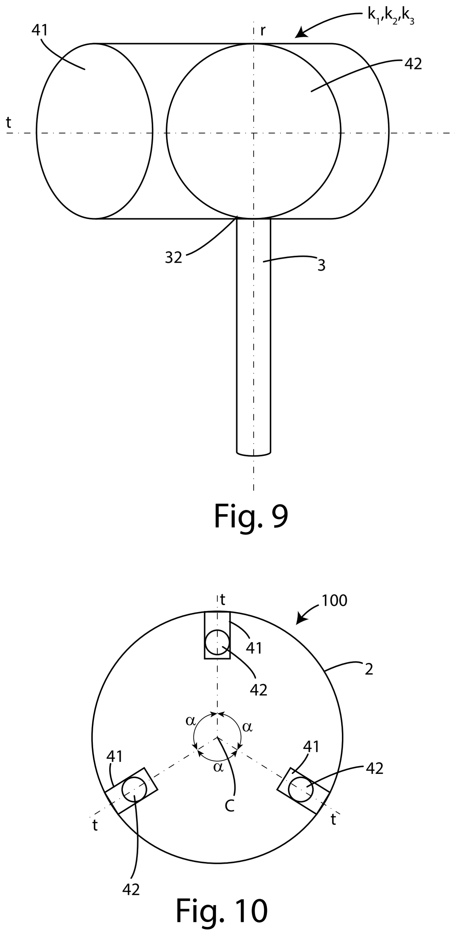

Referring to Figures 9 and 10, such top pairs K₁, K₂, K₃ can be obtained by forming cylindrical holes 41 in the top plate 2, which may have a circular or rectangular shape, in a radial direction along a respective axis t with respect to the geometric center C of the top plate 2, the holes forming an angle α of 120° with respect to each other.

The cylindrical holes 41 thus define a sliding seat 41 for each first end 32 of the adjustment axes 3, in fact, each axis 3 provides a sphere 42 at its first end 32 which allows said slider-type constraint to be obtained. Preferably, each sphere 42 of each adjustment axis 3 has a diameter in a 2:1 ratio with the diameter of the cross-section perpendicular to the longitudinal axis r of the body of the rod 3 of the respective adjustment axis 3. As can be seen in Figure 9, the first end 32 of each adjustment axis 3 has its longitudinal axis r intersecting the center of symmetry of the respective sphere 42, obtaining a concentric coupling. Each sphere 42 is coupled integrally with the first end 32 of the respective axis 3. Consequently, a rotation of the rod 3 about its longitudinal axis r does not induce any relative movement between the rod 3 and the sphere 42. It is therefore ensured that adjusting the inclination does not generate displacements or rotations of the top movable plate 2 with respect to the base plate 1 in the horizontal xy plane.

Of course, each cylindrical seat 41 provides, at its lower portion, which can coincide with the lower face of the top movable plate 2, a notch 43 oriented parallel to the respective sliding axis t, to allow the passage of the body of the respective adjustment axis 3.

Thanks to this kinematic configuration, adjusting an axis 3 of the adjustment system 100 does not cause any relative rotation of the adjustment system 100 itself with respect to the base plate 1. In fact, since the base pairs R₁, R₂, R₃ are kinematic pairs capable of translating along the direction r of the respective axis 3, a displacement of the spheres 42 of the axes 3 with respect to the top plate 2 along the direction t relative to their sliding seats 41 is observed.

Since the rotation of the axes 3 with respect to the base plate 1 is prevented, they are always perpendicular to the base plate 1 and, consequently, are adapted to support axial loads (i.e. tension or compression depending on the base's position) on the axes 3 themselves. This phenomenon occurs because the point of maximum stress at the contact between the sphere 42 of each axis 3 and the respective sliding seat 41 is always defined by a circle, which coincides with the surface of the sphere 42 itself and is aligned along the adjustment direction r of the respective axis 3.

In light of this, the force acting on the sphere 42 of each axis 3 is always perpendicular to the base plate 1 and always applied to the highest point of the sphere 42 itself, regardless of the rotation of the top plate 2.

Using the Kutzbach's formula, it is possible to verify the correct operation of the kinematics of the system 100 according to the invention. In fact, by applying the numerical values of the kinematics of the adjustment system 100 (m = 5, C₁ = 3, C₂ = 0, C₃ = 0, C₄ = 3, and C₅ = 0), a system with 3 degrees of freedom is obtained, which correspond to the rotations around the three xyz axes in the space of the movable top plate 2.

Instead, by locking the top kinematic pairs K₁, K₂, K₃ and applying the kinematic values of the adjustment system 100 under these conditions (m = 2 [since a single body consisting of bases and axes is considered], C₁ = 0, C₂ = 0, C₃ = 0, C₄ = 3, and C₅ = 0), a system with 0 degrees of freedom is obtained, i.e., an isostatic system.

With regard to the base kinematic pairs R₁; R₂; R₃, in particular of the helical type, the system 100 according to the invention provides three through-holes 11 obtained in said base plate 1, one for each adjustment axis 3. On the inner surface of each hole 11 the body of the respective adjustment axis 3 is rotatably engaged. In particular, each hole 11 is positioned equidistantly from the geometric center of the base plate 1, substantially in correspondence with the cylindrical sliding seats 41 formed in the movable plate 2.

Preferably, the axis of rotation r of the adjustment axis 3 is perpendicular to the upper face of the base plate 1.

Preferably, each adjustment axis 3 has a threaded portion 33 on its external body that engages a threaded portion formed on the inner surface of the respective through-hole 11.

Preferably, a lower knob 55 is fixed to the second end 31 of each adjustment axis 3, facilitating the user's grip for adjusting the sliding of the adjustment axis 3 with respect to the base plate 1.

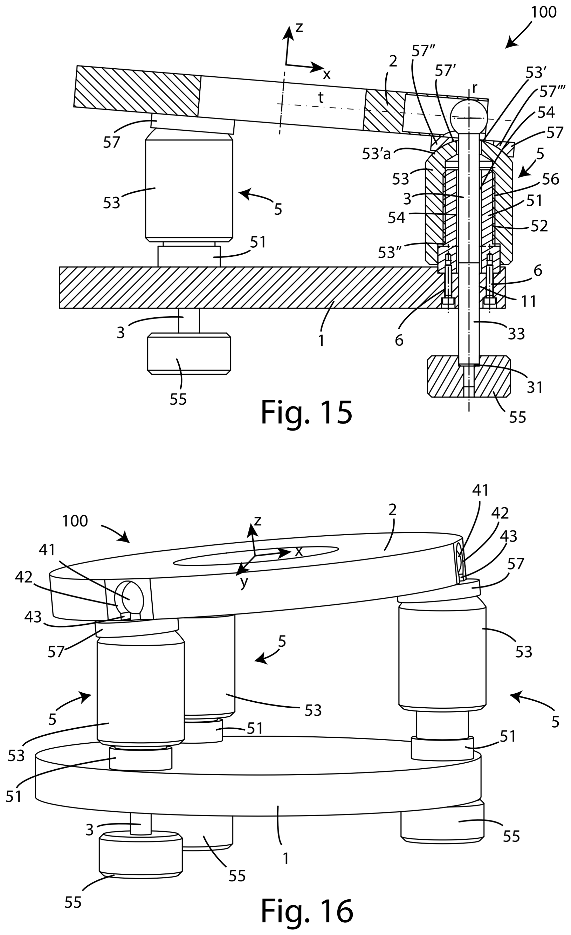

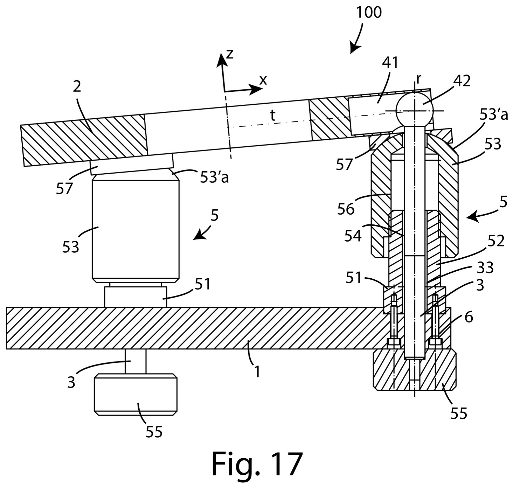

With particular reference to Figures 15 and 17, the rotation of the lower knob 55 induces the axial displacement of the axis 3 along the axis r, causing the movement of its first end 32 along the direction of the axis r, and thus tilting the top plate 2.

In other words, by rotating the three lower knobs 55, each axis 3 has, at its second end 31, a sphere 42 that rotates on itself while screwing into the base plate 1. This rotation allows the translation of the top plate 2, thereby allowing the adjustment of its inclination and position relative to the base plate 1.

In order to compensate for the upper backlash of the coupling between the sphere 42 of each axis 3 and the sliding seat 41 on the movable plate 2, and the lower backlash between the axis 3 and the base plate 1, the invention provides a locking system 5.

The locking system 5 provides a height-adjustable spacer 5 which, by generating tension between the base plate 1 and the movable plate 2, places the adjustment axis 3 under tension.

From a structural point of view, with reference to Figures 15 and 17, the locking system 5 provides a hollow cylindrical support 51 fixed to the lower side of the base plate 1 by fastening means 6, in particular screws 6, at a respective hole 11. Said support 51 has an internal cylindrical surface 54 within which the body of the respective adjustment axis 3 slides.

Furthermore, the axis of the hollow body of the support 51 coincides with the axis of rotation r of the adjustment axis 3.

Furthermore, the locking system 5 comprises an upper knob 53 having a hollow cylindrical body whose internal cylindrical cavity 56 is rotatably coupled to the external cylindrical surface 52 of the hollow cylindrical support 51. In particular, on the cylindrical external surface 52 of said support 51, an external thread 52 is provided, which rotatably engages an internal thread 56 obtained in the internal cylindrical cavity 56 of the upper knob 53.

The upper knob 53 also has a first opening 53' and a second opening 53" through which the respective axis 3 passes and translates freely, having as its end-of-travel position the first end 32 comprising the sphere 42 arranged at the first opening 53'. At said second opening 53", the coupling with the support 51 is provided, which also allows the translation of the respective axis 3 along its internal cylindrical surface 54.

Therefore, the upper knob 53 allows the adjustment and therefore the translation of the adjustment axis 3 along its axis of rotation r, thereby enabling the adjustment of a limit-of-travel position when the lower portion of the top movable plate 2 abuts against the upper end 53'a of the upper knob 53.

In particular, each upper knob 53 provides that its upper end 53'a is a hemispherical portion 53'a with its center positioned on the adjustment direction r of the corresponding adjustment axis 3.

The locking system 5 further provides the presence of a washer 57 having a flat upper face 57", a central hole 57' and a lower face provided with a concavity 57‴ at the opening of the central hole 57', preferably, the concavity 57"' has a radius of curvature coinciding with that of the hemispherical portion 53'a. Therefore, during tightening of the locking system 5 by rotating the upper knob 53 on the support 51, the washer 57 will slide over the surface of the hemispherical portion 53'a of the upper knob 53 and by rotating about its center will simultaneously maintain the upper face 57" parallel to the top plate 2. This end portion 53'a facilitates the backlash between the components of the system 100, due to the relative rotation between the top plate 2 and the base plate 1.

In order to ensure the rotation without obstructions, the central hole 57' of the washer 57 has a larger diameter than the first opening 53' of the upper knob 53, to allow the rotation of the washer 57 on the upper end 53'a of the upper knob 53.

By means of the locking system 5 it is therefore possible to ensure a relatively uniform contact between the upper knob 53 and the top plate 2, which rotates with a maximum resulting angle preferably of about 10°.

Furthermore, in the absence of the washer 57, there would be a single point of contact between the surface of the hemispherical portion 53'a of the upper knob 53 and the top plate 2. This condition can disadvantageously cause wear on the surfaces of both the upper knob 53 and the top plate 2, thereby "flattening" some areas of the hemispherical portion 53'a.

Furthermore, the constraints involving the washer 57 are unilateral, i.e., they are activated when the washer 57 simultaneously comes into contact with both the top plate 2 and the upper knob 53 during the tightening operations.

By providing a locking system 5 for each axis 3, it becomes necessary to tighten all three upper knobs 53 in order to ensure the absence of upper or lower backlash. During tightening, the upper knob 53 reduces its threaded portion 54 engaged with the external thread 52 of the support 51 and tends to increase the distance between the base plate 1 and the top plate 2. This generates a compression simultaneously both between the threads 33 of the axis 3 - plate 1 coupling, and between the sphere 42 and its sliding seat 41.

The locking system 5, by applying tension to all three axes 3 of the adjustment system 100, advantageously allows the upper and lower backlash to be eliminated simultaneously without the need for additional fastenings.

For each locking system 5, once the desired operating configuration of the top plate 2 relative to the base plate 1 is reached, the tightening is carried out by rotating the three upper knobs 53 on their respective supports 51 engaging the respective threads 52, 54 until they abut against the top plate 2. This movement, facilitated by the interposition of the washer 57 between the hemispherical portion 53'a and the top plate 2, increases the tension on each axis 3, ensuring stability of the set operating configuration.

A first example of an operating configuration can be seen in Figures 12 - 15, wherein two axes 3 are locked in an intermediate operating position and one axis 3 is locked in the lower operating position. Figures 16 and 17 show a second operating configuration wherein the right adjustment axis 3 is locked in an upper operating position.

However, through the individual actuation the lower knobs 55, each axis 3 can advantageously be independently adjusted to reach a plurality of positions, allowing each axis 3 to be configured arbitrarily according to the operational requirements of the adjustment system 100 according to the invention.

For example, if it is assumed to keep two axes 3 fixed in said intermediate operating position and act on the third axis 3 of the adjustment system 100, a rotation of the top plate 2 around the midpoint of the axis passing through the centers of the two spheres 42 of the fixed axes 3 can be observed. This rotation of the top plate 2 occurs on a plane that passes through the aforementioned midpoint and the adjusted axis 3. By applying the same principle to each axis 3, three adjustment planes are obtained, each orthogonal to the base plate 1 and aligned along the adjustment direction r of the respective axis 3.

Advantageously, the adjustment system 100 according to the invention comprises a reduced number of components, in particular 30% fewer than the most known state-of-the-art 3-way adjustment systems.

Furthermore, the adjustment system 100 according to the invention offers greater ease of use compared to known state-of-the-art 4-way adjustment systems, as it is not necessary to act on two axes simultaneously to adjust the top plate 2.

Furthermore, an advantage of the adjustment system 100 according to the invention is the simplicity of the shapes of its components. In fact, unlike the prior-art 3-way adjustment systems, it is not necessary to produce parts with different angles of inclination or bases with seats for rotating components.

Since the adjustment system 100 according to the invention has no protrusions and/or deep pockets, all of its components can be produced by chip removal with minimal material waste, thereby completely avoiding the cost of producing molds, that often require the process to be carried out by third parties.

Advantageously, the adjustment system 100 according to the invention has compact dimensions, since the axes 3 are essentially screws always mounted perpendicularly on the base plate 1. This type of coupling always ensures good stability of the adjustment system 100 without the need for bulky structures.

Furthermore, since the overall dimension of adjustment system 100 can be inscribed in a cylinder, it is possible to use a wide variety of packaging options while still having a considerable amount of space for possible accessories.

Due to its simple construction, it is advantageously possible to create different operating configurations for different loads to be supported by simply scaling a large portion of the components of the adjustment system 100, without having to modify the geometries and positions of the axes 3. This also results in improved ease of storage of its components, due to the high packing density of the overall volumes, most components of the adjustment system can be stored while easily optimizing the packaging space.

Furthermore, the more complex components of the adjustment system 100 are not visible from the outside once assembled. Therefore, any finishing operations would only need to be carried out on the main visible components, which advantageously have smooth surfaces particularly suitable for both anodizing processes and painting processes, application of logos, stickers, laser etching, mechanical engravings, and the like.

Due to its compactness and low weight, the adjustment system 100 according to the invention can be easily carried with one hand even without a case or a suitable container, in fact, for cinematography operators, it is essential that transportation is easy and risk-free.

The above-mentioned advantages reduce the production cost of the adjustment system 100 by 50% compared to the state-of-the-art 3-way adjustment systems, without the need for highly advanced machinery.

Advantageously, the simple construction of the adjustment system 100 according to the invention ensures that highly skilled labor is not required for either assembly or disassembly of the system 100 itself, this is particularly relevant for maintenance and potential repairs, even by the user/operator.

Finally, advantageously, the adjustment system 100 does not include any plastic or composite components, which are subject to long-term wear and more difficult to recycle compared to steel and aluminum.

In the foregoing, the preferred embodiments have been described and certain variations of the present invention have been suggested, however, it should be understood that those skilled in the art may make modifications and changes without thereby departing from the scope of protection, as defined in the appended claims.

## Claims

1. A three-way adjustment system (100) for supporting a head for a photo or video camera and adjusting its filming plane (xyz), said system (100) comprising a fixed base plate (1), a top movable plate (2) for supporting said head, and three adjustment axes (3) connecting the two plates (1, 2) to each other,
each adjustment axis (3) having two ends (32, 31) along its longitudinal axis (r),
said system (100) further comprising
three top kinematic pairs (K₁, K₂, K₃), each arranged at a first end (32) of a corresponding adjustment axis (3) and constrained to the top movable plate (2),
three base kinematic pairs (R₁, R₂, R₃), each configured to allow 1 degree of freedom along a translation axis coinciding with the longitudinal axis (r) of the respective adjustment axis (3),
said system (100) being **characterized in that** each top kinematic pair (K₁, K₂, K₃) is configured to allow 4 degrees of freedom, and
**in that** each base kinematic pair (R₁, R₂, R₃) is arranged at the second end (31) of a corresponding adjustment axis (3) and constrained to the base plate (1).

2. The system (100) according to the preceding claim, wherein said three top kinematic pairs (K₁, K₂, K₃) are three translating spherical pairs (K₁, K₂, K₃).

3. The system (100) according to the preceding claim, wherein each of said adjustment axes (3) comprises a rod (3) having a sphere (42) at the first end (32), and wherein said top movable plate (2) comprises three cylindrical seats (41) having a sliding axis (t), within each of which the sphere (42) of the respective rod (3) is slidably coupled.

4. The system (100) according to the preceding claim, wherein each cylindrical seat (41) is arranged on said top movable plate (2) in such a way that its respective sliding axis (t) intersects the geometric center (C) of the top movable plate (2) and is thus oriented at an angle (α) of 120° with respect to the sliding axis (t) of the other cylindrical seats (41).

5. The system (100) according to claim 3 or 4, wherein said sphere (42) of each rod (3) has a diameter in a 2:1 ratio with the diameter of the cross-section perpendicular to the axis (r) of the rod (3).

6. The system (100) according to any one of claims 3 - 5, wherein the diameter of each of said cylindrical seats (41) is substantially coincident with the diameter of the respective sphere (42).

7. The system (100) according to any one of the preceding claims, wherein the longitudinal axis (r) of each adjustment axis (3) is perpendicular to the plane lying on the upper face of said base plate (1).

8. The system (100) according to any one of the preceding claims, wherein said three base kinematic pairs (R₁, R₂, R₃) are three helical pairs (R₁, R₂, R₃).

9. The system (100) according to the preceding claim, wherein each of said adjustment axes (3) comprises a rod (3), wherein the base plate (1) comprises three through-holes (11), and wherein the body of the rod (3) of the respective adjustment axis (3) is rotatably engaged within the inner surface of each hole (11).

10. The system (100) according to the preceding claim, wherein each rod (3) of the respective adjustment axis (3) has a threaded portion (33) on its external body that engages a threaded portion formed on the inner surface of the respective hole (11) present on the base plate (1).

11. The system (100) according to claim 9 or 10, wherein at the second end (31) of each rod (3) of the respective adjustment axis (3), a lower knob (55) is fixed.

12. The system (100) according to any one of the preceding claims, wherein it further comprises a locking system (5) for each adjustment axis (3) associated with it and configured to lock/unlock the respective top kinematic pair (K₁, K₂, K₃) upon user action.

13. The system (100) according to the preceding claim, wherein each locking system (5) is a height-adjustable spacer (5) adapted to act on the respective adjustable axis (3) between the two plates (1, 2).

14. The system (100) according to claim 12 or 13, wherein the locking system (5) comprises a hollow cylindrical support (51) fixed beneath the base plate (1), wherein said support (51) has an internal cylindrical surface (54) and an external cylindrical surface (52), wherein said locking system (5) further comprises an upper knob (53) having a hollow cylindrical body whose internal cylindrical cavity (56) is rotatably coupled to the external cylindrical surface (52) of the hollow cylindrical support (51).

15. The system (100) according to the preceding claim, wherein an external thread (52) is provided on the external cylindrical surface (52) of said support (51), said external thread (52) is rotatably engaged by an internal thread (56) obtained in the internal cylindrical cavity (56) of the upper knob (53).

16. The system (100) according to claim 14 or 15, wherein each upper knob (53) has at its upper end (53'a) a hemispherical portion (53'a) with its center positioned along the adjustment direction (r) of the corresponding adjustment axis (3).

17. The system (100) according to any one of claims 14 - 16, wherein the locking system (5) further comprises a washer (57) having a flat upper face (57"), a central hole (57'), wherein said washer (57) is arranged between the top movable plate (2) and the upper knob (53) and has the body of the rod (3) of the respective adjustment axis (3) passing through its central hole (57').

18. The system (100) according to claims 16 and 17, wherein the lower face of said washer (57) has a concavity (57"') at the opening of the central hole (57'), adapted to engage the hemispherical portion (53'a) of the respective upper knob (53).
